Europäisches Patentamt

European Patent Office

Office européen des brevets

(11) Publication number: **0 401 940**
**A2**

## EUROPEAN PATENT APPLICATION

(21) Application number: **90202087.4**

(22) Date of filing: **27.10.86**

(51) Int. Cl.5: **H01G 1/10**

This application was filed on 31.07.1990 as a divisional application to the application mentioned under INID code 60.

The title of the invention has been amended (Guidelines for Examination in the EPO, A-III, 7.3).

(30) Priority: **31.10.85 US 794245**

(43) Date of publication of application:
**12.12.90 Bulletin 90/50**

(60) Publication number of the earlier application in accordance with Art.76 EPC: **0 222 547**

(84) Designated Contracting States:
**AT BE CH DE FR GB IT LI NL SE**

(71) Applicant: **INTEGRATED POWER COMPONENTS**
**1427 Centre Circle Drive**
**Downers Grove Illinois 60515(US)**

(72) Inventor: **Frederick, William Richard**
**744 Bonniebrook Drive**
**Mundelein, Illinois 60060(US)**

(74) Representative: **Cross, Rupert Edward Blount et al**
**BOULT, WADE & TENNANT 27 Furnival Street**
**London EC4A 1PQ(GB)**

(54) **Method of encapsulating an electrical component.**

(57) A method of encapsulating an electrical component such as a capacitor, having a body and at least two leads extending in one direction from said body, said method comprising the following steps:

a) providing a mold having a first end, a second end, a base surface, and a pair of spaced walls extending upwardly from said base surface to define a cavity, said walls extending from said first end to said second end;

b) inserting a sheet of resilient plastic label material into said cavity so that it concurrently engages said base surface and said walls, said sheet having side ends and extending from said first mold end to said second mold end and having top ends terminating substantially flush with the tops of said walls;

c) sealing the side ends of said sheet;

d) filling the inserted sheet with said component body and a quantity of a liquid potting material, said leads extending above the tops of said walls;

e) curing said potting material;

f) unsealing the side ends of said sheet; and

g) removing the encapsulated component from said mold.

FIG. 3

# WOUND CAPACITOR

This invention relates to a method of encapsulating an electrical component such as a capacitor.

Among the various types of capacitors known are those having a body formed by a winding of a layer or layers of insulation between two sheets of conductive foil. A wound capacitor, as do other types of capacitor, provides a single functional capacitive element of a predetermined value when incorporated into an electrical circuit. The two conductive foils form electrode plates which are spaced by the layer or layers of insulation, forming the dielectric.

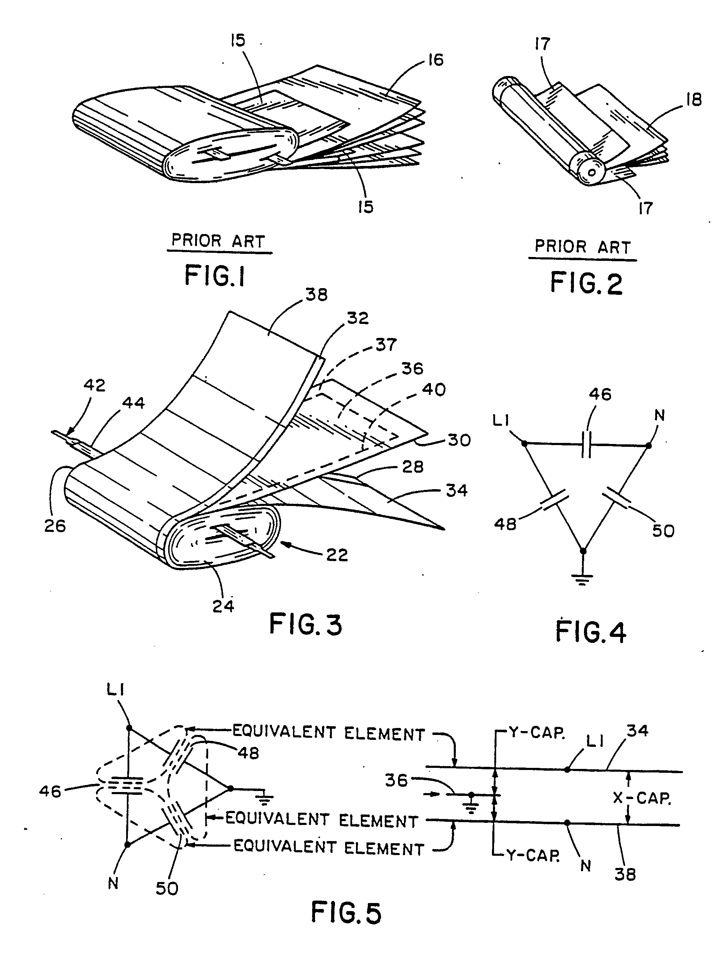

Such a capacitor winding is shown in Fig. 1 of the drawings where the foils 15 are narrower than the insulation layers 16, and the lateral sides of the foils are inset with respect to the ends of the winding. This type of construction is known as "inductive" because tap insert connectors are used which contact respective foils at typically only one location in only one turn of the wound foil, usually about the middle of the length of the foil. Because of the single location of contact, inductance is greatly increased.

Another type of prior art wound capacitor is shown in Fig. 2 of the drawings wherein the opposite lateral side of each foil 17 is extended to, and perhaps past, the corresponding edge of the insulation 18. As one foil extends to one end of the capacitor body but short of the other, while the remaining foil extends to the other end of the capacitor body but short of the first, the ends of the winding can be metallized to make contact with a corresponding foil. This staggering of the foils reduces inductance as the metallized end makes essentially continuous contact with the edge of the foil throughout its entire length.

From FR-A-1603192 there is known a wound capacitor formed by a winding having a pair of lateral sides and including a first, a second and a third insulative layer, extending substantially from one side of said winding to the other side of said winding; a first electrode disposed between said first and second insulative layers; a second electrode disposed between said second and third insulative layers and extending intermediate said sides of said winding and terminating short of each of said sides; a third electrode positioned on the side of said third insulative layer away from said second electrode, the first electrode extending to said one side of said winding and short of the other side of the winding, the third electrode terminating short of said one side of said winding and extending to said other side of said winding; a conductive tab electrically connected to said second electrode;

conductive means at least partially covering said one side, making electrical contact with multiple turns of the first electrode and including a lead; and conductive means at least partially covering said other side making electrical contact with multiple turns of the third electrode and including a lead, whereby said capacitor integrates three capacitive elements.

According to this invention a method of encapsulating an electrical component, such as a capacitor, having a body and at least two leads extending in one direction from said body, said method comprising the following steps:

   a) providing a mold having a first end, a second end, a base surface, and a pair of spaced walls extending upwardly from said base surface to define a cavity, said walls extending from said first end to said second end;

   b) inserting a sheet of resilient plastic label material into said cavity so that it concurrently engages said base surface and said walls, said sheet having side ends and extending from said first mold end to said second mold end and having top ends terminating substantially flush with the tops of said walls;

   c) sealing the side ends of said sheet;

   d) filling the inserted sheet with said component body and a quantity of a liquid potting material, said leads extending above the tops of said walls;

   e) curing said potting material;

   f) unsealing the side ends of said sheet; and

   g) removing the encapsulated component from said mold.

A capacitor formed using one method which is an embodiment of the invention is a multiple function integrated capacitor which consolidates the capacitive functions of three discrete capacitors into a single package, thereby greatly reducing costs and significantly reducing space required for mounting on a printed circuit board compared with accommodating several separate components. Additionally, a capacitor formed using one method which is an embodiment of the present invention greatly reduces inventory costs because only one component need be stocked instead of three separate components. The capacitor may also include additional electrical components such as a bleeder resistor. Other features of the capacitor are reduced inductance, reliability, long service life and its relative simplicity to manufacture, making it inexpensive.

Embodiments of the invention will now be described by way of example with reference to the drawings, in which:-

Figure 1 is a perspective view of the winding or body of one type of prior art capacitor;

Figure 2 is a perspective view of the winding of another type of prior art capacitor;

Figure 3 is a perspective view of a capacitor formed according to one embodiment of the present invention;

Figure 4 is a schematic diagram of a delta capacitor circuit including an X capacitor and two Y capacitors;

Figure 5 illustrates the equivalence between the multiple function capacitor and three discrete capacitors in a delta configuration;

Figure 6 is a simplified illustration of the components of the winding of Figure 3;

Figure 7 is an enlarged end view of components of the winding of Figure 3, including an insert;

Figure 8 is a plan view of the insert of Figure 7;

Figure 9 is a simplified illustration of equipment used for manufacturing the winding of Figure 3;

Figure 10 is a perspective view of a partially completed capacitor incorporating the winding of Figure 3;

Figure 11 illustrates a mold useful in encapsulating the capacitor of Figure 10;

Figure 12 is similar to Figure 8, but illustrates another embodiment of the insert which incorporates a bleeder resistor; and

Figure 13 is a cross-sectional view of a part of the winding of Figure 3, with certain components greatly exaggerated in size, illustrating a slight offset of various components to facilitate reliable metallization of the ends of the winding.

Correspondence reference characters indicate corresponding components throughout the drawings.

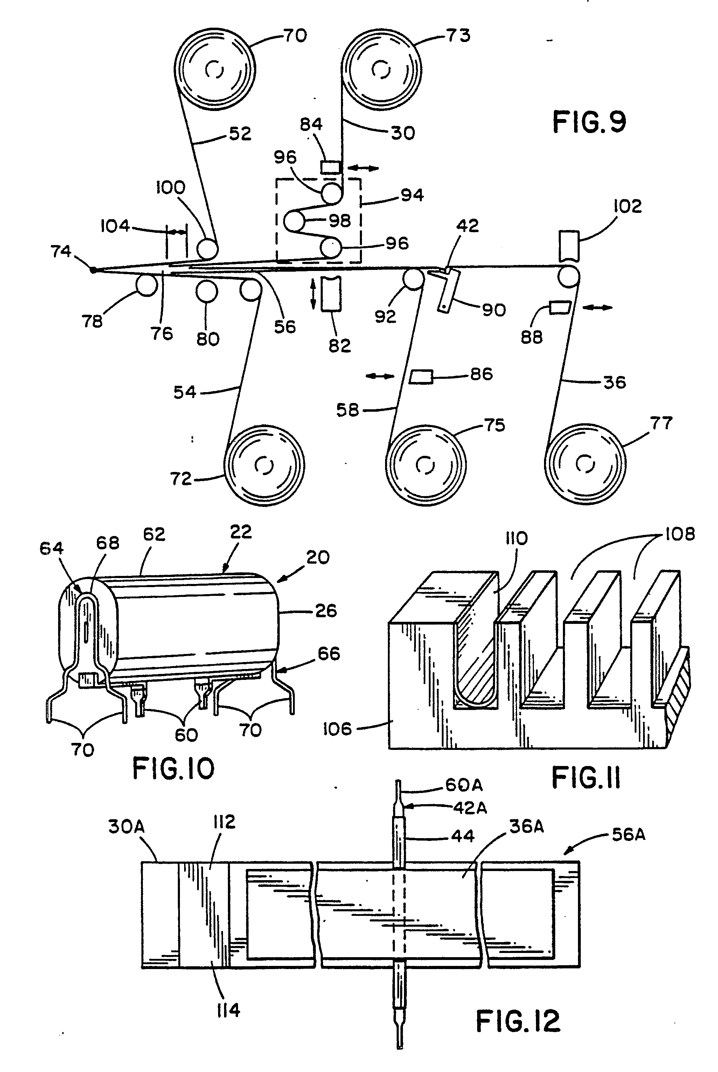

Referring now to the drawings, a multiple capacitive function capacitor which integrates the functions of at least three individual capacitors, is generally indicated by reference numeral 20 in Figure 10. A partially completed winding 22 or body of the capacitor is shown in Figure 3. The winding has a pair of lateral sides 24, 26 (hereinafter referred to as "ends') and includes a first, a second and a third insulative layer (28, 30 and 32 respectively) extending substantially from one winding end 24 to the other winding end 26. A first electrode 34 which is disposed between layers 28 and 30 extends to winding end 24 but not end 26. A second electrode 36 which is located between layers 30 and 32 terminates short of both winding ends with one lateral edge 37 of the electrode 36 in alignment with the inset edge of the electrode 34. The capacitor 20 includes a third electrode 38 positioned on the side of the third layer away from the second electrode 36. The electrode 38 extends to the winding end 26 and terminates short of the winding end 24, preferably in general registration with the corresponding edge 40 of the electrode 36.

Electrical contact is made with the first electrode 34 and the third electrode 38 by providing a conductive covering, i.e., metallizing, the winding ends 24 and 26. A conductive tab 42 contacts the second electrode 36 near the middle of its length with the tab having an insulated portion 44 located at the passage of the tab through the winding end 26 to prevent formation of a conductive path between the second electrode 36 and third electrode 38. It will be appreciated that the capacitor 20 integrates a trio of capacitive elements. The first and third electrodes 34, 38 form the plates of a first or X capacitor while the second and third electrodes 36, 38 and the first and second electrodes 34, 36 form the respective plates of a second and third capacitor (Y capacitors).

The capacitor 20 is particularly useful in the delta capacitor circuit shown in FIG. 4 which has application in radio frequency interference (RFI) emission and susceptibility control. In this arrangement, the X capacitor 46 is connected between line L1 and neutral N. The Y capacitors 48, 50 are connected from L1 to ground and from N to ground, respectively. The equivalence of a delta circuit, using three discrete capacitors, to the capacitor 20 with the electrode 36 grounded, the electrode 34 connected to L1, and the electrode 38 connected to N is illustrated schematically in FIG. 5. The electrode 34 functions as a plate of capacitor 48 and a plate of capacitor 46. The electrode 36 performs the duties of a plate of capacitor 48 and a plate of capacitor 50. Finally, the electrode 38 is the equivalent of respective plates of capacitors 46 and 50. Capacitance and dielectric strength are controlled by appropriate selection of electrode size, distance between electrodes and/or dielectric constant of the insulative material separating the electrodes. It will be readily apparent to one of skill in the art that besides the delta configuration, other configurations requiring series and/or parallel circuits can be effected using the multiple function capacitor 20.

For example, the capacitor 20 has a construction which provides a line to neutral (X) capacitor which has a significantly higher self-resonant frequency than prior capacitors which have only two electrodes. It will be appreciated that the larger a conventional capacitor is, the lower its self-resonant frequency. Above this frequency, a capacitor acts as an inductor. Referring to FIG. 4, when capacitor 20 is used only as a composite X capacitor, there is no need to ground the electrode 36. In fact, the capacitor 20 is not ever provided with the tab 42.

The result is that the discrete "X" capacitor 46, for connection across an electrical load, is shunted by the series combination of the much smaller capacitance capacitors 48 and 50. The presence of the smaller capacitors 48 and 50 across the larger capacitor 46 increases the self-resonant frequency of the composite X capacitor (formed by the three capacitive elements). This occurs because the smaller capacitors (with their higher self-resonant frequency) act to maintain the composite capacitor below its self-resonant frequency even though the self-resonant frequency of the larger capacitive element 46 has been exceeded and it acts as an inductor. Thus the capacitor 20 offers good high frequency performance and is usable over a much broader frequency range than capacitors of conventional design.

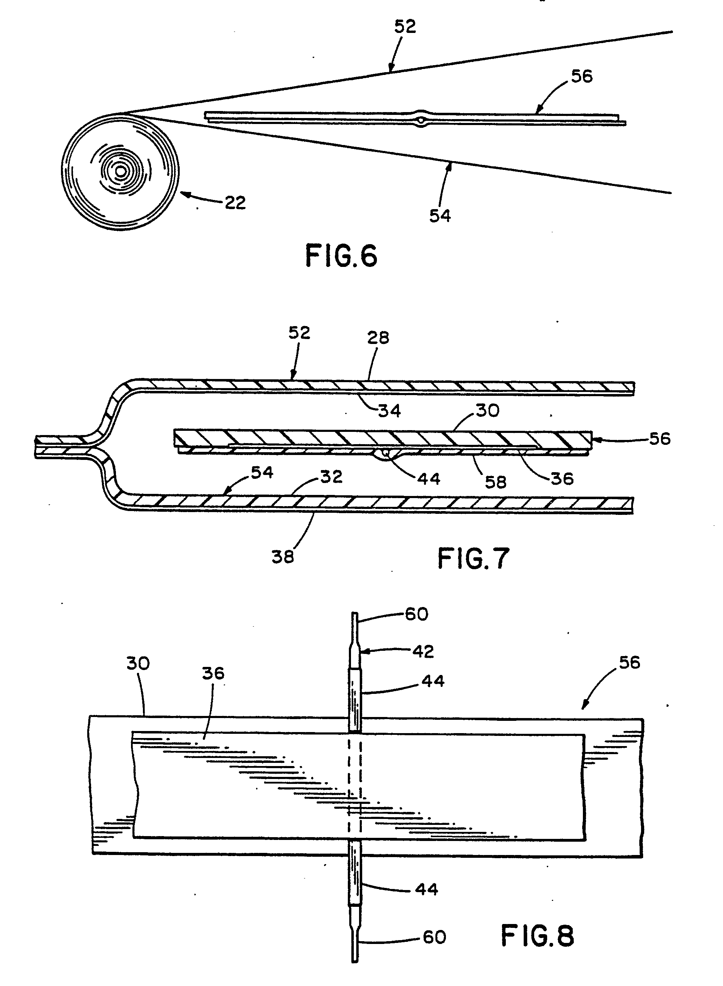

More specifically, and referring to FIGS. 6 and 7, a sheet of plastic film 52, preferably polypropylene, metallized on its lower surface short of winding end 24, preferably forms the first insulative layer 28 and the first electrode 34. It is noted that the winding 22 shown in FIG. 2 has been inverted to better illustrate electrodes 34 and 38. The deposited metal could be aluminum or zinc with a deposited metal thickness of the order of $1 \times 10^{-5}$ cm (1,000Å). It will be appreciated that this gives the capacitor 20 "self-healing" characteristics in that a momentary short circuit through the dielectric is eliminated, because the localized heat generated is sufficient to vaporize the thin electrode in the area of the breakdown. Similarly, another sheet of plastic film 54 metallized on its lower surface short of winding end 26 forms the third insulative layer 32 and the third electrode 38.

The second insulative layer 30 and the second electrode 36 are part of an insert 56 positioned between the metallized sheets 52 and 54. The insert includes a fourth insulative layer 58 extending fully between the winding ends 24 and 26 and disposed between the second electrode 36 and the third insulative 32. Preferably, the second insulative layer 30 has a thickness substantially equal to the combined thicknesses of insulative layers 58 and 32. Thus, when the sheets 52, 54 and the insert 56 are wound together, the second electrode 36 is substantially equally spaced from the electrodes 34 and 38. The insulative layers 30 and 58 are desirably plastic film, most preferably polypropylene, while the second electrode may be aluminum foil of a thickness of about .0005 inch.

Referring to FIG. 8, the layers 30 and 58 extend beyond the foil 36 laterally and at both longitudinally ends of the insert 56 to form an insulative periphery fully surrounding the foil. This feature provides the capacitor with a high dielectric voltage withstand. Also as shown in FIG. 8, the conductive tab 42 is symmetrical with respect to the insert, extending beyond both ends 24, 26 of the winding 22 and having a pair of insulative portions 44. The free ends 60 of the tab 42 are curled to form terminals, as shown in FIG. 10, with the insulative portions 44 being of sufficient length to maintain the tab out of electrical contact with the outer surface 62 of the winding as the tab is first bent to run along the surface 62, and bent again so the tab ends 60 extend away from the winding, parallel to each other.

The capacitor 20 also includes U-shaped leads 64, 66 fused to the respective metallized ends 24, 26 of the winding 22 for electrical connection to electrodes 34, 38, respectively. More specifically, each lead includes a bight portion 68 welded or soldered to a respective winding end, and a pair of parallel legs 70 extending away from the winding 22 generally parallel to tab ends 60.

Simplified equipment for forming the capacitor winding 22 is schematically illustrated in FIG. 9. Spaced rolls 70, 72 of the metallized films 52, 54, respectively, are provided. The ends of the films 52, 54 are wound on an arbor 74 disposed downstream of the rolls, forming a V-shaped gap 76 between the films. The insert 56 made up of films 30 and 58 and conductive foil 36 (from rolls 73, 75 and 77, respectively), is held in the gap 76 between a vertically movable feed arm roller 78 and a feed pressure roller 80 in conjunction with a brake 82. While the metallized sheets 52 and 54 are being wound, the films 30 and 58 can be perforated by perforators 84 and 86, and the foil 36 can be perforated by a perforator 88. A pivotally mounted tab insert arm 90 can be actuated to place the tab 42 between the foil 36 and the sheet 58 with pressure holding the tab in place above a roller 92. Ultrasonic bonding or similar techniques can be used to bond the tab 42 to the foil 36 for specialized applications. The roller 92 is perferably positioned about one-half the distance between the end of the insert foil 36 in the gap 76 and the perforation at perforator 88. This centering of the ground electrical tab 42 midway between the ends of the foil 36 minimizes winding inductance and improves the line to ground high frequency performance.

' The various lengths of the sheets 30 and 58 and the foil 36 making up the insert 56 between the gap 76 and the perforators 84, 86, 88 are adjustable by means of roller assemblies 94, only the one for sheet 30 being illustrated. Each assembly 94 includes a pair of spaced idler rollers 96 and a take-up roller 98 movable relative with respect to the idler rollers to vary the length of the sheet (or foil) held by the roller assembly. The tab insert assembly, made up of tab insert arm 90 and roller 92, is also movable to maintain centering of the tab 42 along the length of the insert 56. The lengths of the insert films 30 and 58 are preferably approximately 3.8cms longer than the length of the insert foil 36. This provides margins at the beginning and end of the insert, increasing the dielectric withstand voltage capability of the Y-type capacitive elements formed by capacitor 20. The presence of the insert dielectrics, formed by the films 30, 58 also increases this dielectric withstand voltage.

When the correct length of metallized sheets 52, 54 is wound on the arbor 74, and the length can be varied for different models depending on the specified X-capacitance, the insert operations starts. The arbor speed is slowed and feed arm roller 78 moves up to close the gap 76. When the gap 76 is closed, the roller 78 stops its upward motion, and feed pressure roller 80, preferably made of a resilient material such as rubber, moves up against an idler roller 100 to apply direct pressure on the insert material between the metallized films 52 and 54. The insert materials 30, 36 and 58 are then pulled onto the arbor 74 by the metallized films, 52 and 54. The arbor speed is increased again. The ground tab 42 moves into the incipient winding 22 in contact with the foil 36 around the arbor 74. The insulated portions 44 of the tab 42 extend past the ends 24, 26 the winding 22. The tab 42 is held in place along the length of the foil 36 during insertion by the pressure between the foil 36 and the film 58. When the correct foil insert length is reached, which along with all material lengths may be measured by photocell counters on appropriate idler rollers, a brake 102 engages, stopping the foil movement. The beginning of the foil 36 is already wrapped around the arbor 74 and continues to be pulled into the winding 22. This causes the foil to separate at the perforation, caused by perforator 88, which at this time is positioned in the gap 76 between rollers 78 and 80. The insert films 30 and 58 continue to feed into the winding, being pulled by the arbor 74 and sliding past the foil which is being held by brake 102. This sliding continues until a margin 104, which increases the dielectric withstand voltage, is achieved. Brake 82 then energizes, stopping the film insert dielectrics. The insert dielectrics wrapped around the arbor 74 continue to be wound into the winding 22, causing the insert dielectrics to separate at the perforations, which are now correctly positioned in gap 76. The feed arm roller 78 then lowers to open the gap 76 to its original size. The arbor 74 continues to turn, finishing the final wrap operation with metallized films 52 and 54. These films 52 and 54 are then cut and the ends are glue-sealed. After the winding 22 is completed, it is removed from the arbor 74, flattened to close the arbor hole and cured using standard processes.

The ground tab 42 is then masked and the ends 24, 26 of the winding 22 are metallized using a flame or arc spray. Current-carrying U-shaped leads 64, 66 are then soldered or welded to the metallized ends 24, 26 of the winding 22, forming the low inductance capacitor contacts for the hot and neutral sides of the capacitor. The double-ended ground tab 42 provides parallel contact to the ground insert electrode 36.

This also provides a low inductance contact to the ground. These low inductance contacts improve the high frequency performance of the capacitor.

The finished capacitor 20 is then epoxy encapsulated and stamped. The epoxy encapsulating system uses a modified mold and fill process. As shown in FIG. 11, the mold 106 is open-ended, having rectangular cavities 108. Stamped clear labels 110, extending approximately 0.38mm past the ends of the mold are inserted into these cavities. The resilience of the plastic label material causes it to form itself to the sides of the mold and it forms its own natural arc against the bottom of the cavity. The top edges of the label are flush with the top of the cavity. Masking tape is then placed across the open ends of the mold with its adhesive forming a seal along the edges of the insert label that extend past the ends of the mold. The masking tape is held in place by contact with the adjacent sides of the mold. The tape seal prevents epoxy leakage when the mold is filled. The mold is then partially filled with epoxy, and the component is placed inside the cavity with the leads protruding out the open top of the mold. The epoxy is displaced by the part, bringing the epoxy level to the top of the mold. The epoxy is then cured using standard processes. The masking tape is removed and the completed part with the label adhering to the epoxy is removed from the mold by pushing it out the open end. This process eliminates mold/epoxy adhesion problems since there is no direct contact between the epoxy and the mold. The process advantages also include lower cost molds since part removal methods, anti-adhesion coatings, release radii, polished surfaces, expensive materials and complex cavity shapes with ends are not needed.

A method of forming the multiple capacitive function wound capacitor 20 includes several steps:

(a) A capacitor winding 22 having a pair of spaced ends 24 and 26 is formed by providing two spaced rolls 70, 72 of metallized film with the metal side of one film terminating short of one end of the winding but extending to the other end of the winding, and with the other film having metallization that extends to the one end of the winding but short of the other end of the winding so that the metallized portions of the two films are staggered.

(b) The leading ends of the two films are wound on an arbor so that the leading portions of the films wound on the arbor form a "V".

(c) A sandwich structure formed by a pair of dielectric layers encompassing a metal foil which terminates short of both ends of the winding, is inserted in the V.

(d) The foil is attached to a conductive tab.

(e) The ends of the completed winding are metallized.

(f) The tab is insulated from the metallized end.

Referring to FIG. 12 an alternative embodiment 20A of the capacitor of the present invention is shown which integrates additional electrical functional elements. Components of capacitor 20A which correspond to components of the capacitor 20 are designated by the reference numeral assigned to the component of capacitor 20 with the addition of the suffix "A". The insert 56A is shown and includes a resistive coating or laminate 112 which forms a bleeder resistor 114 for the capacitor 20A by extending fully between winding ends 24A and 26A. This resistive coating is disposed adjacent to one longitudinal end of the insert, between dielectric layers 30A and 58A and is spaced from the end of the second electrode 36A. It will be appreciated that when the ends 24A, 26A, of the winding 22A are metallized, the bleeder resistor will be placed in parallel with the X capacitive element formed by electrodes 34 and 38. It will also be appreciated that other electrical elements such as additional resistors or transient suppression elements can also be integrated into the capacitor by using appropriate flexible materials and inserting them into the winding in a similar manner.

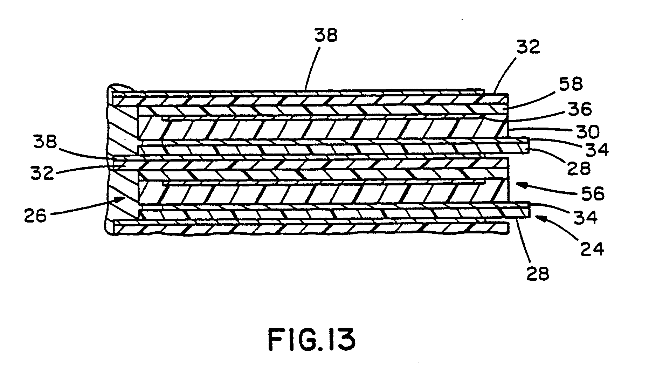

As shown in the greatly exaggerated FIG. 13 which depicts various layers formed by several turns of the winding with only the winding end 26 metallized, while the first insulative layer 28 and the third insulative layer 32 (as well as the insert 56 including the second insulative layer 30) do extend substantially from the one winding end 24 to the other winding end 26, certain components are preferably slightly inset with respect to the winding ends to permit the metallization applied at the respective ends to make surface contact with their corresponding electrodes 34 and 38, as opposed to only making line contact with the ends of respective electrodes. The extent of inset is very small compared to the width of the winding (the distance between ends 24 and 26) which may be over 2.0cms. More specifically, relative to the winding end 24, the insert 56 and the insulative layer 32 are recessed about 1 millimeter. The result is that gaps are formed between turns of insulative layer 28. As the electrode 34, formed by metallization on one surface of layer 28, extends to the winding end 24, metallization of the end 24 causes metal to fill the gaps to make surface contact, resulting in a reliable low impedance connection. Similarly at winding end 26 the insert 56 and the insulative layer 28 are recessed about 1 millimeter so that metallization at the end 26 results in surface contact with the electrode 38 which extends to the end 26.

## Claims

1. A method of encapsulating an electrical component, such as a capacitor, having a body and at least two leads extending in one direction from said body, said method comprising the following steps:

a) providing a mold having a first end, a second end, a base surface, and a pair of spaced walls extending upwardly from said base surface to define a cavity, said walls extending from said first end to said second end;

b) inserting a sheet of resilient plastic label material into said cavity so that it concurrently engages said base surface and said walls, said sheet having side ends and extending from said first mold end to said second mold end and having top ends terminating substantially flush with the tops of said walls;

c) sealing the side ends of said sheet;

d) filling the inserted sheet with said component body and a quantity of a liquid potting material, said leads extending above the tops of said walls;

e) curing said potting material;

f) unsealing the side ends of said sheet; and

g) removing the encapsulated component from said mold.

2. A method as set forth in Claim 1 wherein step (d) includes the substep of partially filling the inserted sheet with the potting material before placing the component body in said sheet.

3. A method as set forth in Claim 1 wherein step (d) includes the substep of filling the inserted sheet with the potting material after placing the component body in said sheet.

4. A method as set forth in Claim 1 wherein said potting material is epoxy.

5. A method as set forth in Claim 1 wherein step (c) includes placing masking tape over the side ends of said sheet.

EP 0 401 940 A2

PRIOR ART
FIG.1

PRIOR ART
FIG.2

FIG.3

FIG.4

FIG.5

FIG.6

FIG.7

FIG.8

FIG.9

FIG.10

FIG.11

FIG.12

EP 0 401 940 A2

FIG.13